# EUROPEAN PATENT APPLICATION

(11) **EP 1 932 815 A1**
(43) Date of publication of application: **18.06.2008**
(21) Application number: 05781837.9
(22) Date of filing: 16.08.2005
(51) Int. Cl.: C04B 28/00, B32B 13/00, A47G 25/12

(54) **ENVIRONMENT-PROTECTION TYPE CONCRETE BASE FOR SUNSHADE AND CHRISTMAS TREE AND METHOD FOR PREPARING THE SAME**

(30) Priority: 16.08.2004 CN 200410058130
(71) Applicant: Tongyi Outdoor Products Co., of Nanhai, Foshan, Foshan Guangdong 528231 (CN)
(72) Inventor: KUANG, Zhucai, Foshan, Guangdong 528231 (CN)
(74) Representative: Dunlop, Hugh Christopher
(86) International application number: PCT/CN2005/001279
(87) International publication number: WO 2006/017989

(57) **Abstract**

The present invention opens an environmental friendly concrete base and its preparation method, which base includes finish materials and core materials as per mass ratio. The finish materials contain sand in mass ratio of 50-70% , cement in mass ratio of 20-40%, pigment in mass ratio of 0.5-2% and water in mass ratio of 1.5-10%; core materials contain sand in mass ratio of 20-40%, cement in mass ratio of 10-30%, crushed stone in mass ratio of 30-45% and water in mass ratio of 2-6%. Preparation method of the concrete base production is as follows: mixing, cover die and inputs, pressing, initial setting, mould removing, initial curing, cleaning, moisture retention curing and packing for storage in total of 9 steps; the materials such as sand, stone, cement and building wastes used for the environmental friendly concrete base so opened in the present invention are easily available, featuring in heavy weight, solid for base building; additional pigment (sunshine proof), low cost; no pollution or secondary pollution will be produced. The materials can be used for road base building etc. without special treatment; the preparation method of the environmental friendly concrete base production is also provided in the present invention, which is simple in production process and easy to operate.

## Description

### FIELD OF THE INVENTION

The present invention relates to the field of concrete base, in particular to the preparation of pressed concrete bases.

### BACKGROUND OF THE INVENTION

Currently all the bases of small apparatus, such as sun umbrella base and Christmas tree base, are made of cast iron, which costs highly, using large amount of mineral resources and producing large amount of pollutant discharges; secondary pollution will also be produced by rustiness in moisture condition when using.

### SUMMARY OF THE INVENTION

The technical issue solved in the present invention provides an environmental friendly concrete base, using sand, stone, cement and building wastes with pigment addition. The product costs low, and no pollution or secondary pollution will be produced.

Preparation method of the concrete base production is also provided in the present invention, which is simple in production process and easy to operate.

To realize the above purpose, the technical scheme adopted in the present invention shall be as follows: an environmental friendly concrete base which includes finish materials and core materials, wherein the finish materials contain sand in mass ratio of 50-70% , cement in mass ratio of 20-40%, pigment in mass ratio of 0.5-2% and water in mass ratio of 1.5-10%; and the core materials contain sand in mass ratio of 20-40%, cement in mass ratio of 10-30%, crushed stone in mass ratio of 30-45% and water in mass ratio of 2-6%.

Sand will be mesh 8 or above. Cement strength grade will be 32.5R or above. Crush stone will be 0.5-1 dan (traditional Chinese measurement unit).

### Preparation method of the environmental friendly concrete base:

1) mixing:
   a. mixing of finish materials by putting sea sand in mass ratio of 50-70%, cement in mass ratio of 20-40%, pigment in mass ratio of 0.5-2% and water in mass ratio of 1.5-10% into the mixer and mixing for 10-30 minutes; and
   b. mixing of core materials by putting sea sand in mass ratio of 25-40%, cement in mass ratio of 10-30%, crushed stone in mass ratio of 35-45% and water in mass ratio of 2-6% into the mixer and mixing for 10-30 minutes;
2) moulds placing and filling:
   a. placing an external ring mould on a bottom mould and placing fixings at desired positions;
   b. spreading 30-50% finishing materials evenly over the bottom mould;
   c. inserting a core mould;
   d. filling core materials inside the core mould, spreading the core materials evenly and taking out core mould; and
   e. placing the rest finishing material around and on the surface of the core materials, spreading the finishing materials evenly and levelling the surface of the finishing materials;
3) pressing: using hydraulic presser to press the filled mould at the pressure of 110-200kg/sq.cm;
4) initial setting: keeping for 6-8 hours;
5) mould removing: removing the mould;
6) initial curing: spraying water on the surface of the product using atomizer to keep moisture for 12-20 hours;
7) washing: washing the product overall after initial curing to reach saturated water level;
8) moisture retention curing: stacking and sealing cleaned products with plastic bags for moisture retention curing for 8-15 days;
9) packing and storing: removing plastic bags and wind drying the product for 10-17 days before delivery or packing/storing (at least 25 days required from initial curing to delivery).

The technical solution provided by the present invention results in the following advantages in the concrete bases produced: the materials such as sand, stone, cement and building wastes used for the concrete base are easily available, in heavy weight, solid for base building; additional pigment (sunshine proof) is of low cost; and no pollution or secondary pollution will be produced. The materials can be used for road base building etc. without special treatment when they are no longer used for the concrete bases.

Meanwhile the present invention provides method for preparing the concrete base, which is simple in production process and easy to operate.

### DETAILED DESCRIPTION OF THE EMBODIMENTS

### Making the base of the sun umbrella

The environmental friendly concrete base includes finish materials and core materials, being 5kg and 10kg separately; the finish materials contain river sand in mass ratio of 68.8% of mesh 8-10; cement in mass ratio of 27% or grade 600 cement with strength grade higher than 32.5R; pigment (Triple ring brand) in mass ratio of 1.6% and water in mass ratio of 2.6%.

The core materials contain river sand in mass ratio of 37%; cement in mass ratio of 17.2% with strength 42.5R; crushed stone in mass ratio of 43% and under 0.5 as well as water in mass ratio of 2.8%.

### The preparation method is as follows:

1) Mixing:
   Mixing of finish materials: put sea sand in mass ratio of 68.8%, cement in mass ratio of 27%, pigment in mass ratio of 1.6 and water in mass ratio of 2.6% into the mixer for 15 minutes;
   Mixing of core materials: put river sand in mass ratio of 37%, cement in mass ratio of 17.2%, crushed stone in mass ratio of 43% and water in mass ratio of 2.8% into mixer for 15 minutes;
2) Moulds placing:
   a. External ring mould shall be placed on the bottom mould and D=2cm hexangular tube shall be placed at the center;
   b. Spread 30-50% finish materials evenly over the bottom mould;
   c. Place core mould;
   d. Place core materials inside the core mould, spread evenly and take out core mould;
   e. Place the rest finishing material around and on top of core materials, spread evenly and level surface;
3) Pressing: hydraulic presser shall be used for mould pressing of 130kg/sq.cm;
4) Initial setting: keeping for 6 hours;
5) Mould removing: remove mould;
6) Initial curing: spray water to the product surface by using atomizer to keep moisture for 12-20 hours;
7) Cleaning: overall cleaning of the product base shall be required after initial curing to reach saturated water content;
8) Moisture retention curing: stack cleaned products. Sealed plastic bags shall be placed for moisture retention curing for 13 days;
9) Packing and storing: Remove plastic bags and place in the open for 13 days before delivery or packing/storing (at least 25 days required from initial curing to delivery).

The present invention results in the following advantages in the environmental friendly concrete base: the materials such as sand, stone, cement and building wastes used for the concrete base are easily available, in heavy weight, solid for sun umbrella base; additional pigment is low cost and no pollution or secondary pollution will be produced. The materials can be reused for road base building etc.

Meanwhile the present invention provides preparation method of the environmental friendly concrete base production which is simple in production process and easy to operate.

### Making the base of bar counter

The environmental friendly concrete base includes finish materials and core materials, being 8kg and 27kg separately; the finish materials contain sea sand in mass ratio of 60% of mesh 8-10; cement in mass ratio of 35% in strength grade of 42.5R; pigment (Triple ring brand) in mass ratio of 1.6% and water in mass ratio of 3.4%.

The core materials contain river sand in mass ratio of 40%; cement in mass ratio of 18% with strength of 42.5R; crushed stone in mass ratio of 39% under 0.5 and water in mass ratio of 3.

### The preparation method is as follows:

1) Mixing:
   Mixing of finish materials: put sea sand in mass ratio of 60%, cement in mass ratio of 35%, pigment in mass ratio of 1.6% and water in mass ratio of 3.4% into the mixer for 20 minutes;
   Mixing of core materials: put river sand in mass ratio of 40%, cement in mass ratio of 18%, crushed stone in mass ratio of 39% and water in mass ratio of 3% into mixer for 20 minutes;
2) Moulds placing and filling:
   a. External ring mould shall be placed on the bottom mould and D=2cm hexangular tube shall be placed at the center;
   b. Spread 38% finishing materials evenly over the bottom mould;
   c. Place core mould;
   d. Place core materials inside the core mould, spread evenly and take out core mould;
   e. Place the rest finishing material around and on top of core materials, spread evenly and level surface;
3) Pressing: hydraulic presser shall be used for mould pressing of 180kg/sq.cm;
4) Initial setting: keeping for 8 hours;
5) Mould removing: Remove mould;
6) Initial curing: spray water to the product surface by using atomizer to keep moisture for 18 hours;
7) Cleaning: overall cleaning of the product base shall be required after initial curing to reach saturated water content;
8) Moisture retention curing: stack of cleaned products. Sealed plastic bags shall be placed for moisture retention curing for 13 days;
9) Packing and storing: Remove plastic bags and place in the open for 15 days before delivery or packing/storing (at least 25 days required from initial curing to delivery).

The present invention produces the following benefits of the environmental friendly concrete base: the materials such as sand, stone, cement and building wastes used for thee concrete base are easily available, in heavy weight, solid for sun umbrella base; additional pigment is low cost and no pollution or secondary pollution will be produced. The materials can be reused for road base building etc.

Meanwhile the present invention provides preparation method of the environmental friendly concrete base production which is simple in production process and easy to operate.

## Claims

1. An environmental friendly concrete base which includes finish materials and core materials, **characterized in that**:
the finish materials contain sand in mass ratio of 50-70% , cement in mass ratio of 20-40%, pigment in mass ratio of 0.5-2% and water in mass ratio of 1.5-10%; and
the core materials contain sand in mass ratio of 25-40%, cement in mass ratio of 10-30%, crushed stone in mass ratio of 30-45% and water in mass ratio of 2-6%.

2. The concrete base of claim 1 wherein said sand is sand over mesh 8.

3. The concrete base of claim 1 wherein the strength of said cement is over or equal to grade 32.5R.

4. The concrete of claim 1 wherein said crushed stone is 0.5-1 dan (traditional Chinese measurement unit).

5. A method for preparing an environmental friendly concrete base in accordance with claim 1, comprising the steps of:
1) mixing:
a. mixing of finish materials by putting sea sand in mass ratio of 50-70%, cement in mass ratio of 20-40%, pigment in mass ratio of 0.5-2% and water in mass ratio of 1.5-10% into the mixer and mixing for 10-30 minutes; and
b. mixing of core materials by putting sea sand in mass ratio of 25-40%, cement in mass ratio of 10-30%, crushed stone in mass ratio of 35-45% and water in mass ratio of 2-6% into the mixer and mixing for 10-30 minutes;
2) moulds placing and filling:
a. placing an external ring mould on a bottom mould and placing fixings at desired positions;
b. spreading 30-50% finishing materials evenly over the bottom mould;
c. inserting a core mould;
d. filling core materials inside the core mould, spreading the core materials evenly and taking out core mould; and
e. placing the rest finishing material around and on the surface of the core materials, spreading the finishing materials evenly and levelling the surface of the finishing materials;
3) pressing: using hydraulic presser to press the filled mould at the pressure of 110-200kg/sq.cm;
4) initial setting: keeping for 6-8 hours;
5) mould removing: removing the mould;
6) initial curing: spraying water on the surface of the product using atomizer to keep moisture for 12-20 hours;
7) washing: washing the product overall after initial curing to reach saturated water level;
8) moisture retention curing: stacking and sealing cleaned products with plastic bags for moisture retention curing for 8-15 days;
9) packing and storing: removing plastic bags and wind drying the product for 10-17 days before delivery or packing/storing (at least 25 days required from initial curing to delivery).
